# EUROPÄISCHE PATENTSCHRIFT

(11) **EP 3 300 605 B1**
(45) Veröffentlichungstag und Bekanntmachung des Hinweises auf die Patenterteilung: **08.04.2020**
(21) Anmeldenummer: 16191311.6
(22) Anmeldetag: 29.09.2016
(51) Int. Cl.: A23C 1/04, A23C 9/14, A23C 9/152, A23C 9/16, A23C 1/12, A23C 3/033, A23L 3/22

(54) **VERFARHEN ZUR HERSTELLUNG EINES KEIMAMRMEN MILCHPULVERS MIT HOHEM MPI (III)**
METHOD OF PREPARATION OF LOW GERM MILK POWDERS WITH HIGH MPI (III)
PROCÉDÉ DE PRODUCTION DE LAIT EN POUDRE PAUVRE EN GERMES AVEC HAUT MPI (III)

(43) Veröffentlichungstag der Anmeldung: 04.04.2018
(73) Patentinhaber: DMK Deutsches Milchkontor GmbH, 27404 Zeven (DE)
(72) Erfinder: HOLST, Thomas, 27404 Zeven (DE); NOLTE, Andreas, 27308 Kirchlinteln (DE)
(74) Vertreter: Fabry, Bernd

(56) Entgegenhaltungen:
- EP-A1- 2 679 098
- US-A1- 2016 000 100
- Anonymous: "Chapter 7: DESIGNING A PROCESS LINE", Tetra Pak Dairy Processing Handbook, 1. Januar 2015 (2015-01-01), Seiten 1-20, XP055317126, Gefunden im Internet: URL:http://www.dairyprocessinghandbook.com /chapter/designing-process-line [gefunden am 2016-11-08]
- HEILIG A ET AL: "Suitability of Dahlem Cashmere goat milk towards pasteurisation, ultrapasteurisation and UHT-heating with regard to sensory properties and storage stability", SMALL RUMINANT RESEARCH, ELSEVIER, AMSTERDAM, NL, Bd. 78, Nr. 1-3, 1. August 2008 (2008-08-01), Seiten 152-161, XP023314773, ISSN: 0921-4488, DOI: 10.1016/J.SMALLRUMRES.2008.06.003 [gefunden am 2008-07-24]

## Beschreibung

### GEBIET DER ERFINDUNG

Die Erfindung befindet sich auf dem Gebiet der Milchprodukte und betrifft ein Verfahren zur Herstellung sprühgetrockneter Milchpulver, die sich sowohl durch eine verminderte Keimbelastung als auch einen hohen MPI auszeichnen.

### STAND DER TECHNIK

Zur Herstellung von keimarmen Milchpulvern wird beispielsweise bereits pasteurisierte Magermilch mit etwa 9 % Trockenmasse auf eine Konzentration von etwa 40 % eingedampft. Die Konzentrate enthalten jedoch noch eine große Menge an thermoresistenten Keimen und Sporen, insbesondere aus der Maissilage, mit denen die Kühe gefüttert werden und die infolge nicht ausreichender Stallhygiene schließlich in der Rohmilch landen. Aus diesem Grunde ist es bislang erforderlich, die Konzentrate vor dem Versprühen einer Hocherhitzung zu unterwerfen, mit deren Hilfe die Keime und Sporen quantitativ zerstört werden und aus der ein keimfreies und hochqualitatives Produkt resultiert.

Allerdings wirkt sich die Hocherhitzung nicht nur auf die Keime und Sporen aus, es werden auch die wertvollen Molkenproteine ganz oder ganz überwiegend denaturiert und damit das Produkt in seiner Funktionalität und Ernährungsphysiologie nachteilig verändert. Molkenproteine gehören zu den Albuminen und Globulinen; dazu zählen insbesondere das alpha-Lactalbumin und das beta-Lactoglobulin, Serumalbumin, Proteosepepton und die Immunoglobuline. Molkenproteine stellen ernährungsphysiologisch betrachtet hochwertige Milchbestandteile dar und dienen beispielsweise in Eiweißpräparaten speziell zum Muskelaufbau. Während unbehandelte Magermilch als Maßzahl für den Gehalt an Molkenproteinen einen so genannten Molkenproteinindex (MPI, englisch WPNI) oberhalb von 6, speziell von 6,1 aufweist, nimmt dieser bei der üblichen Ultrahocherhitzung auf Werte unter 1 ab, was ausgesprochen unerwünscht ist.

Eine Alternative würde darin bestehen, die Temperaturbehandlung bei niedrigeren Temperaturen, etwa bei 70 °C anstelle von über 100 °C durchzuführen. In der Tat weisen die so erhaltenen Produkte einen MPI/WPNI oberhalb von 5 auf, allerdings ist die Keimbelastung so hoch, dass Produkte erhalten werden, die allenfalls eingeschränkt verkaufsfähig sind.

In diesem Zusammenhang sei auf die CN 20111116530 A1 verwiesen, die ein Verfahren zur Herstellung von Niedrigtemperatur-Milchpulver offenbart, bei dem man Magermilch bei 40 bis 50 °C einer Mikrofiltration über eine anorganische Membran mit einem Porendurchmesser von 0,8 bis 1,4 µm filtriert. Anschließend wird das MF-Produkt bei 72 bis 78 °C sterilisiert und bei 45 bis 75 °C in einem Fallfilmverdampfer aufkonzentriert. Es schließt sich eine Sprühtrocknung an, wobei die Temperatur im Einlass bei 180 bis 200 °C und am Ausgang 80 bis 105 °C beträgt. Die Schrift enthält weder Angaben über den MPI der resultierenden Produkte noch über deren Keimbelastung.

Das Dokument US 2016/0000100 A1 offenbart Verfahren zur Herstellung von keimarmen Vollmilchprodukten, bei dem man
(a1) gegebenenfalls das zu entkeimende Milchprodukt einer Wärmevorbehandlung in einem Wärmeaustauscher unterwirft und auf Temperaturen im Bereich von 25 bis 30 °C erwärmt,
(a2) das gegebenenfalls vorbehandelte Milchprodukt durch Infusion auf Temperaturen von 50 bis 75 °C erhitzt und dabei pasteurisiert, und
(a3) das pasteurisierte Produkt durch Flashkühlung abkühlt.

Auch aus der EP 2679098 A1 (DMK) ist ein Verfahren zur Herstellung von keimarmen Milchpulvern bekannt, bei dem ein Mikrofiltrationsschritt zur Abtrennung der Keime dient; diese Anmeldung enthält jedoch keinen Hinweis auf die Herstellung von Pulvern, die mit Wirkstoffen angereichert sind.

Während Filtrationsverfahren also als Prozessschritt in der Milchverarbeitung sehr geeignet sind, zumindest die Keimbelastung deutlich zu reduzieren, handelt es sich hierbei um eine technische aufwendige und daher teure Maßnahme, die im Zusammenhang mit niedrigen Verkaufspreisen für Milchprodukte keine Aussicht auf Realisierung hat.

Die Herstellung von Milchpulvern umfasst daher üblicherweise die folgende Schritte: Die Rohmilch wird in einem kombinierten Wärmetauscher/Separator zunächst im PWT auf 55 °C erhitzt und dann der Rahm abgetrennt. Die Magermilch wird in einem Eindampfer erwärmt und dann in einem RWT pasteurisiert (72-75 °C, 15-45 s) und in einem weiteren PWT auf 8 °C abgekühlt. Von dort aus wird sie wieder im nächsten PWT auf über 70°C erwärmt und dann konzentriert. Um den Konzentrator kontinuierlich fahren zu können, wird die Milch in ein Puffergefäß gefahren und von dort aus der Konzentrator beschickt. Die aufkonzentrierte Milch verlässt den Konzentrator mit ca. 40 °C wird wieder auf 70 °C erwärmt und dann bei 200°C sprühgetrocknet. Das Pulver verlässt den Turm mit ca. 30 °C.

Mit dieser konventionellen Fahrweise sind indes eine ganze Reihe von Nachteilen verbunden:
1. In den Plattenwärmeaustauschern finden die thermophilen Keime bei ca. 55 °C ideale Wachstumsbedingungen vor. Auch das zwischenzeitliche Wiederaufwärmen führt zu einem starken Keimwachstum.
2. Die Molkenproteine - insbesondere dann, wenn sie in der nicht-konzentrierten Milch vorliegen - vertragen keine Temperaturen, die 70 °C übersteigen, aber für die Abtötung der Keime erforderlich sind. Die resultierenden Pulver weisen daher ein MPI von maximal 6.2 auf.
3. Die Turmpulver weisen mehr als 1.000 thermophile und mehr als 5.000 mesophile Keime auf, was zwar noch zulässig ist, aber verringert werden sollte.

Die Aufgabe der vorliegenden Erfindung hat daher darin bestanden, ein vereinfachtes Verfahren zur Herstellung von Turmpulver auf Basis von Magermilch herzustellen, wobei die Pulver eine niedrigere Keimzahl und gleichzeitig einen höheren MPI aufweisen sollten.

### BESCHREIBUNG DER ERFINDUNG

Die Erfindung betrifft ein Verfahren zur Herstellung eines keimarmen Milchpulvers mit einem Molkenproteinindex (MPI) von mindestens 6, umfassend die folgenden Schritte:
(a) Bereitstellen einer Rohmilch;
(b) Erwärmen der Rohmilch in zwei hintereinandergeschalteten Wärmeaustauschern, von denen mindestens einer einen Röhrenwärmeaustauscher darstellt, wobei die Milch im ersten Austauscher auf etwa 35 °C und im zweiten Austauscher auf etwa 55 °C erwärmt wird;
(c) Abtrennen des Rahms unter Erhalt einer Magermilch;
(d) Pasteurisieren der Magermilch in einem Röhrenwärmeaustauscher über einen Zeitraum von 10 bis 60 Sekunden bei einer Temperatur von 72 bis 75 °C;
(e) Eindampfen der pasteurisierten Magermilch auf eine Trockenmasse von etwa 35 bis etwa 55 Gew.-%
(f) Trocknung des pasteurisierten Magermilchkonzentrats in einem Sprühturm,
wobei die Milch während der einzelnen Verfahrensschritte nicht zwischenlagert wird.

Vorzugsweise werden mit dem erfindungsgemäßen Verfahren Milchpulver erzeugt, die weniger als 1.000 thermophile und/oder weniger als 5.000 mesophile Keime und/oder keine pathogene Keime aufweisen und sich gleichzeitig durch einen MPI von mindestens 6, vorzugsweise von 7,0 bis 7,5 auszeichnen.

### SEPARATION

Unter Separation (Schritte b und c) wird die Abtrennung des Rahms bis auf einen Fettanteil von etwa 0,5 Gew.-% sowie die Entfernung von Feststoffen verstanden.

Im Rahmen der vorliegenden Erfindung kommen statt der sonst üblichen Plattenwärmeaustauscher Röhrenwärmeaustauscher zum Einsatz. Diese Maßnahme führt überraschenderweise dazu, dass das Wachstum der thermophilen Keime selbst bei ansonsten idealen Bedingungen von 55 °C deutlich verringert wird. Es hat sich dabei als besonders vorteilhaft erwiesen, die Erwärmung der Rohmilch in Schritt (b) in zwei hintereinandergeschalteten Wärmeaustauschern, von denen mindestens einer einen Röhrenwärmeaustauscher darstellt, durchzuführen, wobei die Milch im ersten Austauscher auf etwa 35 °C und im zweiten Austauscher auf etwa 55 °C erwärmt wird.

Die Abtrennung von Feststoffen sowie die Entrahmung des Fettanteils von etwa 4 Gew.-% erfolgen üblicherweise in einem nachgeschalteten Bauteil, vorzugsweise einem Separator. Derartige Bauteile sind aus dem Stand der Technik hinreichend bekannt. In der Milchindustrie sehr verbreitet sind Separatoren der Firma GEA Westfalia Separator GmbH, mit denen die Feststoffabtrennung einzeln oder gemeinsam durchgeführt werden können (http://www.westfalia-separator.com/de/anwendungen/molkereitechnik/milch-molke.html). Bevorzugte Kaltmilchseparatoren werden von diesem Hersteller unter der Bezeichnung "Procool" angeboten. Entsprechende Bauteile sind beispielsweise auch in der DE 10036085 C1 und der DE 10361526 B3 (Westfalia) beschrieben und dem Fachmann bestens bekannt, so dass es zur Durchführung dieser Verfahrensschritte keiner weiteren Erläuterungen bedarf.

### PASTEURISIERUNG

Bei diesem Verfahrensschritt (d) handelt es sich um eine gesetzliche Maßnahme, mit der sichergestellt werden soll, dass die Milch als mikrobiologisch einwandfrei angesehen und für den Verzehr freigegeben werden kann. Diese Pasteurisierung findet in einem Röhrenwärmeaustauscher statt, an dem ein Temperaturgradient anliegt, der jedoch so gewählt ist, dass das Produkt für eine Verweilzeit von mindestens 10 und höchstens 60 Sekunden, vorzugsweise etwa 30 Sekunden auf eine Temperatur von 72 bis 75 °C erhitzt wird.

### KONZENTRIERUNG

Die pasteurisierte Milch verlässt den Röhrenwärmeaustauscher, gegebenenfalls nach Durchlauf eines Warmhaltemediums mit einer Temperatur von etwa 40 °C. Es schließt sich nun ein Schritt an, bei dem der pasteurisierten Magermilch Wasser entzogen und auf eine Trockenmasse von 35 bis 55 Gew.-% und insbesondere 35 bis 45 % Gew.-% konzentriert wird. Hierfür eignen sich konventionelle Eindampfer besonders. Allerdings hat bis zum Tage der Anmeldung das Vorurteil bestanden, dass ein Eindampfer nur dann zuverlässig kontinuierlich betrieben werden kann, wenn ihm ein ebenso konstanter Strom an Milch zugeführt wird. Anders ausgedrückt, bei Schwankungen in der Menge an Milch, die aus der Pasteurisierungsstufe kommt - was in großen Anlagen immer der Fall sein kann - kommt es zu einem ungeregelten Betrieb des Eindampfers. Aus diesem Grunde sehen Anlagenbauer bislang stets vor, dass die Milch entweder nach Verlassen des Separators oder nach Passieren der Pasteurisierung zunächst in ein erwärmtes Vorlagegefäß gepumpt wird ("Puffergefäß"), aus dem dann tatsächlich kontinuierlich in den Eindampfer gefördert werden kann. Diese Maßnahme ist jedoch ausgesprochen nachteilig, denn entweder erfolgt die Lagerung bei vergleichsweise niedrigen Temperaturen im Bereich um die 55 °C, so dass die Temperaturdifferenz zum Eindampfer nicht zu groß wird, oder bei annähernd gleicher Temperatur wie im Eindampfer, also bei etwa 75 °C. Im ersten Fall werden zwar die Molkenproteine geschont, aber es liegen ideale Bedingungen für das Wachstum thermophiler Keime vor, im zweiten Fall wird ein großer Teil der wertvollen Proteine denaturiert, zudem findet - was bisher auch nicht bekannt war - auch bei 70 °C immer noch ein rapides Keimwachstum statt, wie aus der nachfolgenden **Tabelle 1** ersichtlich:

**Tabelle 1**

| Wachstum thermophile Keime als Funktion von Zeit und Temperatur | | |
|---|---|---|
| **Temperatur [°C]** | **Zeit [h]** | **Keimzahl/ml** |
| 65 | 1 | 2.300 |
| | 2 | 10.100 |
| | 3 | 830.000 |
| | 4 | 1.290.00 |
| | 5 | 2.540.000 |
| 70 | 1 | 1.900 |
| | 2 | 4.100 |
| | 3 | 510.000 |
| | 4 | 340.000 |
| | 5 | 1.700,000 |
| 75 | 1 | 300 |
| | 2 | 100 |
| | 3 | 200 |
| | 4 | < 100 |
| | 5 | < 100 |
| 80 | 1 | 100 |
| | 2 | 100 |
| | 3 | 100 |
| | 4 | 100 |
| | 5 | 100 |

Zudem erweist sich auch die Temperaturschädigung der Molkenproteine als deutlich schwerwiegender als bisher bekannt, wie der Verlauf des MPI einer pasteurisierten Magermilch bei Lagerung bei 74 °C gemäß **Tabelle 2** zeigt:

**Tabelle 2**

| Wachstum thermophile Keime als Funktion von Zeit und Temperatur (74 °C) | | |
|---|---|---|
| **Zeit [s]** | **MPI - Ansatz 1** | **MPI - Ansatz 2** |
| 30 | 7,62 | 7,18 |
| 300 | 7,38 | 6,90 |
| 600 | 5,94 | 6,86 |
| 900 | 5,76 | 5,61 |
| 1.200 | 5,60 | 5,03 |
| 1.500 | 5,40 | 4,38 |
| 1.800 | 4,62 | 4,19 |
| 2.100 | 4,37 | 3,89 |
| 2.400 | 4,29 | 3.83 |
| 2.700 | 4,20 | 3,09 |

Die Anmelderin hat daher auf die Zwischenschaltung eines Vorlagebehälters verzichtet und damit ursprünglich in Kauf nehmen wollen, dass es zu Betriebsstörungen im Eindampfer kommen kann, überraschenderweise hat sich dies jedoch als technisches Vorurteil erwiesen, da moderne Eindampfer inzwischen auch mit Schwankungen in der Einsatzmenge zurechtkommen, ohne dass es zu Problemen kommt. Diese Erkenntnis war der Schlüssel dafür, Milchpulver in vereinfachter Weise herstellen zu können, die sich auch noch durch verbesserte Qualität auszeichnen. Demgemäß gehört zu den besonderen Erkenntnissen der Erfindung, dass man die Milch während der einzelnen Verfahrensschritte nicht zwischenlagert.

Der Magermilch können entweder vor oder vorzugsweise nach dem Eindampfen weitere wasserlöslichen Hilfs- und Zusatzstoffe zusetzt.

### TROCKNUNG

Im folgenden Verfahrensschritt wird das Magermilchkonzentrat getrocknet. Vorzugsweise kommt dabei die Sprühtrocknung zum Zuge, wobei die Temperatur im Einlass typischerweise 180 bis 260 °C, vorzugsweise 220 °C und am Ausgang 80 bis 105 °C beträgt. Das Milchkonzentrat kann auf etwa 75 °C vorerwärmt werden, vorzugsweise wird es jedoch nicht weiter erwärmt, bevor es in den Sprühturm gelangt; auch auf diesem Wege wird sichergestellt, dass es weder zu Keimwachstum noch zu Denaturierung kommt. Alternativ können die Produkte auch durch Bandtrocknung, Gefriertrocknung und dergleichen entwässert werden.

Der Produkt können vor, vorzugsweise aber nach dem Versprühen auch weitere pulverförmige Zusatzstoffe zugesetzt werden, wie beispielsweise Lactoferrin, Lecithine, Vitamine oder Lebensmittelemulgatoren **[**EP 1314367 A1**,** NESTLE] und dergleichen.

### BEISPIELE

### VERGLEICHSBEISPIEL 1

Das Vergleichsbeispiel V1 betrifft ein übliches kontinuierliches Verfahren zur Herstellen eines Magermilchpulvers, das über einen Turm versprüht wird.

Hierzu wird Rohmilch über einen Plattenwärmeaustauscher geleitet und auf 55 °C erwärmt; im angeschlossenen Separator erfolgt die Abtrennung des Rahms worauf eine Magermilch erhalten wird. Diese wird in einer Kombination aus zwei Plattenwärmeaustauschern zunächst auf 72 bis 75 °C erwärmt und dort für etwa 30 Sekunden belassen. Die so pasteurisierte Milch wird auf etwa 8 °C abgekühlt, um ein Wachstum thermophiler Keime zu verhindern und unmittelbar vor der Konzentrierung wieder auf 70 °C erwärmt, wobei die Abfolge von Aufwärmen und Abkühlen im Wesentlichen durch Wärmetausch erfolgt, so dass der Energieverlust in Summe gering ist. Die erwärmte Milch wird in einen Sammelbehälter gefahren, aus dem dann kontinuierlich in den Eindampfer gefördert wird. Das Konzentrat mit etwa 55 Gew.-% Trockenmasse weist zu diesem Zeitpunkt einen MPI von 6,5 auf. Das Konzentrat verlässt den Eindampfer mit einer Temperatur unterhalb von 40 °C und gelangt in einen weiteren Plattenwärmeaustauscher, in dem es auf über 70 °C erhitzt wird. Dies hat eine Abnahme des MPI auf 6,2 zur Folge. Das vorgewärmte Konzentrat wird bei 200 °C versprüht und verlässt den Turm nach Durchlaufen weiterer Wärmetauscher mit einer Temperatur von 30 °C. Das Pulver weist eine Restfeuchte von weniger als 5 Gew.-% und einen MPI von 6,0 bis 6,2 auf. Die mikrobiologische Analyse zeigt, dass noch zwischen 1.000 und 5.000 thermophile Keime sowie zwischen 5.000 und 10.000 mesophile Keime enthalten sind. Damit kann das Pulver als für die menschliche Ernährung eingestuft werden.

### BEISPIEL 1

Das erfindungsgemäße Beispiel 1 zeigt wie unter Einsparung von bestimmten Prozessschritten nicht nur der technische Aufwand gesenkt, sondern gleichzeitig der MPI erhöht und die Keimzahlen in einem Magermilchpulver gesenkt werden können.

Hierzu wird Rohmilch in einer Kombination aus einem ersten Platten- und einem zweiten Röhrenwärmeaustauscher in zwei Schritten zunächst auf 35 °C und dann auf 55 °C erwärmt sowie der Rahm in an sich bekannter Weise abgetrennt. Die so erhaltene Magermilch wird anschließend ohne weitere Temperaturbehandlung und ohne Zwischenlagerung in einem weiteren Röhrenwärmeaustauscher über einen Zeitraum von etwa 30 Sekunden bei 72 bis 75°C pasteurisiert und dann ebenfalls ohne Zwischenlagerung in einem Puffergefäß unmittelbar in den Eindampfer gefahren. Das Konzentrat mit einer Trockenmasse von etwa 55 Gew.-% verlässt den Eindampfer mit einer Temperatur von etwa 40 °C und weist einen MPI von 7,5 auf. Es wird ohne weitere Zwischenerwärmung direkt auf den Turm gegeben und bei 200 °C versprüht. Es wird ein Pulver mit einer Restfeuchte von weniger als 5 Gew.-% erhalten, welches einen MPI von 7,3 bis 7,5 aufweist. Die mikrobiologische Analyse weist aus, dass sowohl die Zahl der thermophilen Keime unter 1.000 und die Zahl der mesophilen Keime unter 5.000 liegt.

### VERGLEICHSBEISPIEL V2

Beispiel 1 wurde wiederholt, um eine kontinuierliche Versorgung des Eindampfers mit Produkt sicherzustellen, wurde nach dem Separator und vor dem Erhitzer ein Vorlaufgefäß zwischengeschaltet, in dem die Milch bei 55 °C zwischengelagert wurde. Das nach dem Versprühen erhaltene Pulver wies zwar einen MPI von 7,3 auf, enthielt jedoch zwischen 1.000 und 5.000 thermophile Keime sowie zwischen 5.000 und 10.000 mesophile Keime.

### VERGLEICHSBEISPIEL V3

Beispiel 1 wurde wiederholt, um eine kontinuierliche Versorgung des Eindampfers mit Produkt sicherzustellen, wurde unmittelbar vor dem Erhitzer ein Vorlaufgefäß zwischengeschaltet, in dem die Milch bei 74 °C zwischengelagert wurde. Das nach dem Versprühen erhaltene Pulver enthielt zwar weniger als 1.000 thermophile Keime sowie etwa 5.000 mesophile Keime, es wurde jedoch nur ein MPI von 6,4 erreicht.

Mit diesen Beispielen und Vergleichsbeispielen wird gezeigt, dass der Einsatz von Röhrenwärmeaustauschern gegenüber Plattenwärmeaustauschern vorteilhaft ist. Es wird auch das Vorurteil überwunden, dass ein kontinuierliches Eindampfen nur dann möglich ist, wenn die Milch in einem Puffergefäß zwischengelagert wird.

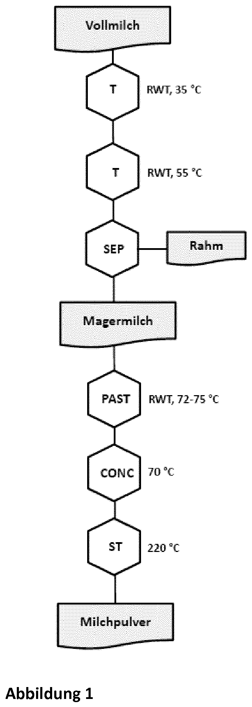

Beispiel 1 wird nachfolgend in einem Fließschema **(****Abbildung 1****)** weiter erläutert. Dabei bedeuten die Abkürzungen:
- T: = Temperaturbehandlung
- RWT: = Röhrenwärmeaustauscher
- SEP: = Separator
- PAST: = Pasteurisierung
- CONC: = Eindampfer
- ST: = Sprühturm
Der erste RWT kann auch durch einen Plattenwärmeaustauscher (PWT) ersetzt werden.
An den Konzentrierungsschritt kann sich im Bedarfsfall noch eine Aufwärmung in einem Wärmetauscher bis auf 75 °C anschließen.

## Patentansprüche

1. Verfahren zur Herstellung eines keimarmen Milchpulvers mit mit einem Molkenproteinindex (MPI) von mindestens 6, umfassend die folgenden Schritte:
(a) Bereitstellen einer Rohmilch;
(b) Erwärmen der Rohmilch in zwei hintereinandergeschalteten Wärmeaustauschern, von denen mindestens einer einen Röhrenwärmeaustauscher darstellt, wobei die Milch im ersten Austauscher auf etwa 35 °C und im zweiten Austauscher auf etwa 55 °C erwärmt wird;
(c) Abtrennen des Rahms unter Erhalt einer Magermilch;
(d) Pasteurisieren der Magermilch in einem Röhrenwärmeaustauscher über einen Zeitraum von 10 bis 60 Sekunden bei einer Temperatur von 72 bis 75 °C;
(e) Eindampfen der pasteurisierten Magermilch auf eine Trockenmasse von 35 bis 55 Gew.-%
(f) Trocknung des pasteurisierten Magermilchkonzentrats in einem Sprühturm,
wobei die Milch während der einzelnen Verfahrensschritte nicht zwischenlagert wird.

2. Verfahren nach Anspruch 1, **dadurch gekennzeichnet, dass** man Milchpulver herstellt, die keine pathogene Keime enthalten.

3. Verfahren nach den Ansprüchen 1 und/oder 2, **dadurch gekennzeichnet, dass** man Milchpulver herstellt, die einen MPI von von 7,0 bis 7,5 aufweisen.

4. Verfahren nach mindestens einem der Ansprüche 1 bis 3, **dadurch gekennzeichnet, dass** man der Milch entweder vor oder nach dem Eindampfen weitere wasserlöslichen Hilfs- und Zusatzstoffe zusetzt.

5. Verfahren nach mindestens einem der Ansprüche 1 bis 4, **dadurch gekennzeichnet, dass** man das Milchkonzentrat gegebenenfalls ohne weitere Erwärmung direkt versprüht.

6. Verfahren nach mindestens einem der Ansprüche 1 bis 5, **dadurch gekennzeichnet, dass** man die Sprühtrockung bei einer Temperatur im Bereich von 180 bis 260 °C durchführt.

7. Verfahren nach mindestens einem der Ansprüche 1 bis 6, **dadurch gekennzeichnet, dass** man dem Milchkonzentrat nach dem Versprühen weitere pulverförmige Hilfs- und Zusatzstoffe zusetzt.

## Claims

1. A process for the production of a low-bacteria milk powder having a whey protein nitrogen index (MPI) of at least 6, comprising the following steps:
(a) providing a raw milk;
(b) heating the raw milk in two serially connected heat exchangers, of which at least one represents a tubular heat exchanger, whereby the milk is heated to about 35 °C in the first exchanger and to about 55 °C in the second exchanger,
(c) separating the cream, obtaining a skimmed milk;
(d) pasteurizing the skimmed milk in a tubular heat exchanger for a period from 10 to 60 seconds at a temperature from 72 to 75 °C;
(e) evaporating the pasteurized skimmed milk to a dry matter content from 35 to 55% by weight;
(f) drying the pasteurized skimmed milk concentrate in a spray tower.

2. Process according to claim 1, wherein the manufactured milk powder has no pathogenic bacteria.

3. Process according to claims 1 and/or 2, wherein the manufactured milk powder has a MPI of between 7.0 and 7.5.

4. Process according to at least one of claims 1 to 3, further comprising the step of adding water-soluble additives and adjuvants to the milk either before or after evaporating.

5. Process according to at least one of claims 1 to 4, wherein the milk concentrate is directly sprayed, optionally without any further heating.

6. Process according to at least one of claims 1 to 5, wherein spray drying is performed at a temperature in the range from 180 to 260 °C.

7. Process according to at least one of claims 1 to 6, further comprising the step of adding additives and adjuvants in powder form to the milk after evaporating.

## Revendications

1. Procédé de préparation d'une poudre de lait à faible teneur en germes ayant un indice protéique du lactosérum (IPM) d'au moins 6, comprenant les étapes suivantes :
a) la fourniture de lait cru ;
(b) le chauffage du lait cru dans deux échangeurs de chaleur connectés en série, dont au moins un est un échangeur de chaleur tubulaire, le lait étant chauffé à environ 35°C dans le premier échangeur et environ 55°C dans le second échangeur ;
c) la séparation de la crème pour obtenir un lait écrémé ;
d) la pasteurisation du lait écrémé dans un échangeur de chaleur tubulaire pendant une période de 10 à 60 secondes à une température de 72 à 75 °C ;
e) l'évaporation du lait écrémé pasteurisé en une matière sèche de 35 à 55 % en poids
f) la séchage du lait écrémé concentré pasteurisé dans une tour de pulvérisation.

2. Procédé selon la revendication 1, **caractérisé en ce que** l'on prépare des poudres de lait qui ne contiennent pas de germes pathogènes.

3. Procédé selon les revendications 1 et/ou 2, **caractérisé en ce que** l'on prépare des poudres de lait qui ont un IPM de 7,0 à 7,5.

4. Procédé selon au moins l'une des revendications 1 à 3, **caractérisé en ce que** d'autres adjuvants et additifs hydrosolubles sont ajoutés au lait avant ou après évaporation.

5. Procédé selon au moins l'une des revendications 1 à 4, **caractérisé en ce que** le concentré de lait est pulvérisé directement, éventuellement sans chauffage supplémentaire.

6. Procédé selon au moins l'une des revendications 1 à 5, **caractérisé en ce que** le séchage par atomisation est effectué à une température comprise entre 180 et 260°C.

7. Procédé selon au moins l'une des revendications 1 à 6, **caractérisé en ce que** d'autres adjuvants et additifs en poudre sont ajoutés au concentré de lait après pulvérisation.
